# EUROPÄISCHE PATENTSCHRIFT

(11) **EP 2 943 707 B1**
(45) Veröffentlichungstag und Bekanntmachung des Hinweises auf die Patenterteilung: **12.04.2017**
(21) Anmeldenummer: 14700346.1
(22) Anmeldetag: 09.01.2014
(51) Int. Cl.: F16K 31/60

(54) **VENTIL, VENTILVORRICHTUNG UND VERFAHREN ZUM ZUSAMMENFÜGEN EINER VENTILVORRICHTUNG**
VALVE, VALVE DEVICE AND METHOD FOR ASSEMBLING A VALVE DEVICE
SOUPAPE, DISPOSITIF FORMANT SOUPAPE ET PROCÉDÉ PERMETTANT L'ASSEMBLAGE D'UN DISPOSITIF FORMANT SOUPAPE

(30) Priorität: 11.01.2013 DE 102013100247
(43) Veröffentlichungstag der Anmeldung: 18.11.2015
(73) Patentinhaber: KNORR-BREMSE Systeme für Nutzfahrzeuge GmbH, 80809 München (DE)
(72) Erfinder: KONCZ, Laszlo, H-6000 Kecskemét (HU); FARKAS, Gabor, H-6000 Kecskemét (HU); PAPP, Lajos, H-6100 Kiskunfélegyháza (HU); MAJLATH, Attila, H-6000 Kecskemét (HU)
(86) Internationale Anmeldenummer: PCT/EP2014/050303
(87) Internationale Veröffentlichungsnummer: WO 2014/108462

(56) Entgegenhaltungen:
- US-A1- 2010 213 397
- US-B1- 7 093 819

## Beschreibung

Die vorliegende Erfindung bezieht sich auf ein Ventil, insbesondere ein Luftfederungsventil für ein Fahrzeug, auf eine Ventilvorrichtung und auf ein Verfahren zum Zusammenfügen einer Ventilvorrichtung.

Häufig ist ein Ventil mittels eines Betätigungshebels betätigbar. Ein Betätigungshebel kann an einem Mitnehmer des Ventils angebracht sein. Der Mitnehmer dient hierbei einer Bewegungsübertragung zwischen Betätigungshebel und Ventil. Oftmals ist ein solches Ventil aber in unterschiedlichen Umgebungen einzusetzen, was einen kostenintensiven speziellen Umbau für das jeweilige Einsatzszenario erfordert.

Die Druckschrift US 7,093,819 B1 offenbart ein Ballventil mit einer Abscherbuchse und eine integrale Klammer zum Schutz gegen Dampfaustritt.

Die Druckschrift US 2010/213397 A1 offenbart ein Höhenkontrollventil für ein Fahrzeugnivellierungssystem.

Es ist die Aufgabe der vorliegenden Erfindung, ein verbessertes Ventil, insbesondere ein Luftfederungsventil für ein Fahrzeug, eine verbesserte Ventilvorrichtung und ein verbessertes Verfahren zum Zusammenfügen einer Ventilvorrichtung zu schaffen.

Diese Aufgabe wird durch ein Ventil, eine Ventilvorrichtung mit dem Ventil und ein Verfahren zum Zusammenfügen einer Ventilvorrichtung gemäß den unabhängigen und nebengeordneten Patentansprüchen gelöst.

Ein Ventil, insbesondere Luftfederungsventil für ein Fahrzeug, weist einen Ventilkörper mit einem Mitnehmer auf, wobei der Mitnehmer einen Aufnahmeabschnitt zum Aufnehmen eines an dem Mitnehmer anbringbaren Betätigungshebels aufweist, dadurch gekennzeichnet, dass der Aufnahmeabschnitt ausgebildet ist, um ohne Umrüsten des Aufnahmeabschnitts einen Betätigungshebel mit einem ersten Querschnittsprofil aufzunehmen oder einen Betätigungshebel mit einem von dem ersten Querschnittsprofil unterschiedlichen, zweiten Querschnittsprofil aufzunehmen.

Bei dem Fahrzeug kann es sich um ein Kraftfahrzeug handeln, insbesondere ein straßengebundenes Kraftfahrzeug, wie einen Personenkraftwagen, einen Lastkraftwagen oder ein sonstiges Nutzfahrzeug. Das Ventil kann insbesondere in Verbindung mit einer Luftfederung eines Fahrzeugs verwendet bzw. eingesetzt werden. Der Ventilkörper kann Fluidkanäle und ein Absperrelement aufweisen, das mit dem Mitnehmer mechanisch verbunden ist. Der Mitnehmer kann einer Übertragung einer Bewegung bzw. einer Kraft zwischen dem Betätigungshebel und dem Ventilkörper, insbesondere dem Absperrelement des Ventilkörpers, dienen. Der Aufnahmeabschnitt kann in dem Mitnehmer ausgeformt sein. Der Aufnahmeabschnitt kann ausgebildet sein, um den Betätigungshebel aufzunehmen, wobei der Betätigungshebel entlang einer Haupterstreckungsachse des Betätigungshebels verschiebbar ist.

Eine Ventilvorrichtung weist folgende Merkmale auf:
eine Version des vorstehend genannten Ventils; und
einen Betätigungshebel mit einem ersten Querschnittsprofil oder einem zweiten Querschnittsprofil, wobei der Betätigungshebel zum Anbringen desselben an dem Mitnehmer des Ventils in dem Aufnahmeabschnitt des Mitnehmers aufnehmbar oder aufgenommen ist.

Eine Version des vorstehend genannten Ventils kann als Teil der Ventilvorrichtung vorteilhaft eingesetzt bzw. verwendet werden, insbesondere um einen Betätigungshebel vorteilhaft an dem Ventil anzubringen.

Ein Verfahren zum Zusammenfügen einer Ventilvorrichtung weist folgende Schritte auf:
Bereitstellen eines Ventilkörpers mit einem Mitnehmer und eines an dem Mitnehmer anbringbaren Betätigungshebels, der ein erstes Querschnittsprofil oder ein zweites Querschnittsprofil aufweist; und
Anordnen des Betätigungshebels in einem an dem Mitnehmer angeordneten Aufnahmeabschnitt, der ausgebildet ist, um ohne Umrüsten des Aufnahmeabschnitts einen Betätigungshebel mit einem ersten Querschnittsprofil aufzunehmen oder einen Betätigungshebel mit einem von dem ersten Querschnittsprofil unterschiedlichen, zweiten Querschnittsprofil aufzunehmen.

Durch Ausführung des Verfahrens kann eine Version der vorstehend genannten Ventilvorrichtung vorteilhaft zusammengefügt werden.

Gemäß Ausführungsformen der vorliegenden Erfindung kann ein Mitnehmer eines Ventils ausgebildet sein, um Betätigungshebel mit zwei unterschiedlichen Querschnittsprofilen, beispielsweise entweder einen zylindrischen oder einen flachen Hebel bzw. Arm zur Betätigung des Ventils aufnehmen. Die Aufnahmeöffnung bzw. der Aufnahmeabschnitt des Mitnehmers ist durch eine Kombination der zwei Querschnittsprofile bzw. Formen, z. B. zylindrisch und rechteckig, realisiert.

Vorteilhafterweise ist gemäß Ausführungsformen der vorliegenden Erfindung eine Fixierungsmöglichkeit für zwei unterschiedliche Hebeltypen bzw. Hebelausführungen, z. B. zylindrisch und flach, ohne Hinzufügung neuer Elemente realisiert. Vorteilhaft ist die Verwirklichung einer Fixierung, welche zwei unterschiedliche Querschnittsprofile von Hebeln, beispielsweise sowohl einen zylindrischen als auch einen flachen Hebel, aufnehmen kann, ohne etwas an dem Mitnehmer ändern zu brauchen. Ermöglicht ist somit insbesondere eine Kombination einer Fixierung eines flachen Hebels sowie eines runden, stabförmigen Hebels auf einfache, wirtschaftliche und platzsparende Weise. Somit können an einem Ventil aufgrund des Aufnahmeabschnittes gemäß Ausführungsformen der vorliegenden Erfindung verschiedene Betätigungshebel angebracht werden. Zudem kann der Hebel in dem Mitnehmer derart verschiebbar aufnehmbar sein, dass eine Länge des Hebels zu einer Betätigungseinrichtung hin einstellbar ist. Eine solche einstellbare Länge beispielsweise eines flachen Hebels kann ermöglichen, dass ein Hebel mit einheitlicher Länge für unterschiedliche Einbaugegebenheiten bzw. Bedürfnisse nutzbar ist.
Gemäß einer Ausführungsform des vorstehend genannten Ventils kann der Aufnahmeabschnitt einen Rundprofilabschnitt zum Aufnehmen eines Betätigungshebels mit einem runden Querschnittsprofil und einen Rechteckprofilabschnitt zum Aufnehmen eines Betätigungshebels mit einem rechteckigen Querschnittsprofil aufweisen. Eine solche Ausführungsform bietet den Vorteil, dass in einem derart ausgeformten Aufnahmeabschnitt zwei gängige und weitverbreitete Querschnittsprofile von Betätigungshebeln aufgenommen werden können.

Hierbei können der Rundprofilabschnitt und der Rechteckprofilabschnitt des Aufnahmeabschnitts sich als eine gemeinsame Durchgangsöffnung entlang einer Aufnahmeachse des Betätigungshebels in dem Aufnahmeabschnitt durch den Mitnehmer hindurch erstrecken. Dabei können der Rundprofilabschnitt und der Rechteckprofilabschnitt des Aufnahmeabschnitts eine gemeinsame mittlere Längserstreckungsachse durch den Mitnehmer hindurch aufweisen. Eine solche Ausführungsform bietet den Vorteil, dass eine platzsparende Aufnahme für einen Betätigungshebel mit beispielsweise rundem Querschnittsprofil oder rechteckigem Querschnittsprofil bereitgestellt ist.

Insbesondere kann der Aufnahmeabschnitt ausgebildet sein, um Schmalseiten eines rechteckigen Querschnittsprofils eines Betätigungshebels mit einem rechteckigen Querschnittsprofil U-förmig zu umgreifen. Dabei kann der Aufnahmeabschnitt gegen die Schmalseiten des rechteckigen Querschnittsprofils in Kontakt bringbar sein und gegen an die Schmalseiten angrenzende Teilabschnitte von Langseiten des rechteckigen Querschnittsprofils in Kontakt bringbar sein. Auch kann der Aufnahmeabschnitt ausgebildet sein, um zum Befestigen eines Betätigungshebels mit einem rechteckigen Querschnittsprofil den Betätigungshebel dessen Schmalseiten umgreifend festzuklemmen. Unter ein er Schmalseite kann eine Seite des Betätigungshebels verstanden werden, die eine geringere Breite als zumindest eine andere Seite des Betätigungshebels aufweist. Dabei kann der Aufnahmeabschnitt ausgebildet sein, um an die Schmalseiten angrenzende Teilabschnitte von Langseiten des Betätigungshebels mit rechteckigem Querschnittsprofil mechanisch zu kontaktieren. Anstelle einer Fixierung des Betätigungshebels ausschließlich an dessen Hauptoberflächen erfolgt ein Umgreifen bzw. eine Klemmung an den Schmalseiten des Betätigungshebels, sodass der Betätigungshebel mit dem rechteckigen Querschnittsprofil einfach in den Aufnahmeabschnitt einbringbar und gegebenenfalls in dem Aufnahmeabschnitt einfach bezüglich des Mitnehmers verschiebbar ist.

Ferner kann der Aufnahmeabschnitt ausgebildet sein, um gegen zwei Umfangsteilabschnitte eines runden Querschnittsprofils eines Betätigungshebels mit einem runden Querschnittsprofil in Kontakt bringbar zu sein. Hierbei ist der Aufnahmeabschnitt ausgebildet, um gegen das runde Querschnittsprofil des Betätigungshebels mit rundem Querschnittsprofil teilumfänglich in Anlage bringbar zu sein. Insbesondere kann der Aufnahmeabschnitt ausgebildet sein, um gegen einen ersten Umfangsteilabschnitt von weniger als 180 Grad und gegen einen zweiten Umfangsteilabschnitt von weniger als 180 Grad des runden Querschnittsprofils des Betätigungshebels in Kontakt bringbar zu sein. Eine solche Ausführungsform bietet den Vorteil, dass der Betätigungshebel mit dem runden Querschnittsprofil einfach in den Aufnahmeabschnitt einbringbar und gegebenenfalls in dem Aufnahmeabschnitt einfach bezüglich des Mitnehmers verschiebbar ist.

Auch kann eine an dem Mitnehmer anordenbare oder angeordnete Befestigungseinrichtung vorgesehen sein zum Befestigen des Betätigungshebels in dem Aufnahmeabschnitt des Mitnehmers. Die Befestigungseinrichtung kann eine in dem Mitnehmer benachbart zu dem Aufnahmeabschnitt ausgeformte Gewindebohrung oder dergleichen aufweisen, in der eine Schraube oder dergleichen aufnehmbar oder aufgenommen ist. Somit kann die Befestigungseinrichtung eine Gewindebohrung und gegebenenfalls eine Schraube aufweisen. Mittels der Befestigungseinrichtung ist eine Aufnahmequerschnittsfläche des Aufnahmeabschnittes veränderbar, um den Betätigungshebel in dem Aufnahmeabschnitt zu befestigen. Eine solche Ausführungsform bietet den Vorteil, dass der Betätigungshebel in dem Aufnahmeabschnitt sicher gehalten und befestigt werden kann.

Dabei kann die Befestigungseinrichtung eine Längserstreckungsachse aufweisen, die sich im Wesentlichen quer bezüglich einer Aufnahmeachse des Betätigungshebels in dem Aufnahmeabschnitt erstreckt. Unter einer im Wesentlichen quer bezüglich einer Aufnahmeachse des Betätigungshebels in dem Aufnahmeabschnitt gerichteten Erstreckung kann eine Ausrichtung verstanden werden, bei der die Ausrichtung der Längserstreckungsachse innerhalb eines Toleranzbereichs von beispielsweise 20 Grad Abweichung senkrecht zur Aufnahmeachse des Betätigungshebels ausgerichtet ist. Eine solche Ausführungsform bietet den Vorteil, dass eine Aufnahmequerschnittsfläche des Aufnahmeabschnittes auch einfache Weise veränderbar ist, um den Betätigungshebel in dem Aufnahmeabschnitt zu befestigen. Es kann hierbei eine große Klemmkraft auf den Betätigungshebel ausgeübt werden.

Gemäß einer Ausführungsform des vorstehend genannten Verfahrens kann ein Schritt des Befestigens des Betätigungshebels in dem Aufnahmeabschnitt des Mitnehmers mittels einer an dem Mitnehmer anordenbaren oder angeordneten Befestigungseinrichtung vorgesehen sein. Dabei kann mittels der Befestigungseinrichtung eine Aufnahmequerschnittsfläche des Aufnahmeabschnittes verändert werden, um den Betätigungshebel in dem Aufnahmeabschnitt zu befestigen. Eine solche Ausführungsform bietet den Vorteil, dass der Betätigungshebel in dem Aufnahmeabschnitt sicher gehalten und befestigt werden kann.

Bevorzugte Ausführungsbeispiele der vorliegenden Erfindung werden nachfolgend Bezug nehmend auf die beiliegenden Zeichnungen näher erläutert. Es zeigen:
- Figuren 1 und 2: Darstellungen von Ventilvorrichtungen;
- Figuren 3 bis 6: Darstellungen einer Ventilvorrichtung gemäß einem Ausführungsbeispiel der vorliegenden Erfindung mit unterschiedlichen Betätigungshebeln und aus unterschiedlichen Ansichten; und
- Fig. 7: ein Ablaufdiagramm eines Verfahrens gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

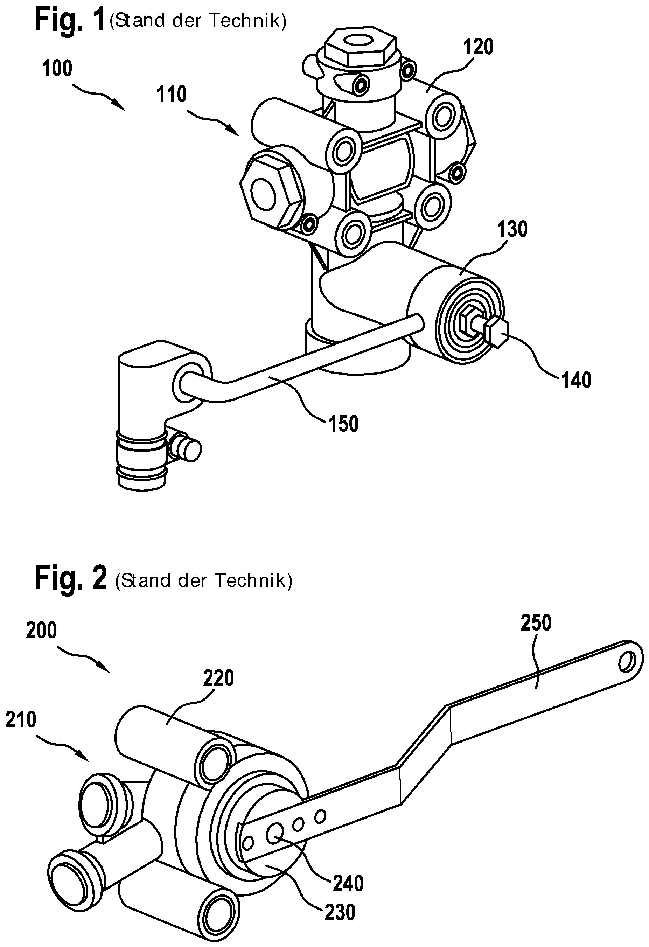

Fig. 1 zeigt eine perspektivische Darstellung einer Ventilvorrichtung 100. Die Ventilvorrichtung 100 weist ein Ventil 110 mit einem Ventilkörper 120 und einem Mitnehmer 130 auf. Ferner weist die Ventilvorrichtung 100 eine Befestigungseinrichtung 140 und einen Betätigungshebel 150 auf. Der Betätigungshebel 150 ist mittels der Befestigungseinrichtung 140 an dem Mitnehmer 130 des Ventils 110 angebracht. Der Betätigungshebel 150 weist ein rundes Querschnittsprofil auf. Der Mitnehmer 130 und die Befestigungseinrichtung 140 sind speziell zur Anbringung des in Fig. 1 gezeigten Betätigungshebels 150 mit dem runden Querschnittsprofil ausgebildet.

Fig. 2 zeigt eine perspektivische Darstellung einer Ventilvorrichtung 200. Die Ventilvorrichtung 200 weist ein Ventil 210 mit einem Ventilkörper 220 und einem Mitnehmer 230 auf. Ferner weist die Ventilvorrichtung 200 eine Befestigungseinrichtung 240 und einen Betätigungshebel 250 auf. Der Betätigungshebel 250 ist mittels der Befestigungseinrichtung 240 an dem Mitnehmer 230 des Ventils 210 angebracht. Der Betätigungshebel 250 weist ein rechteckiges Querschnittsprofil auf. Der Mitnehmer 230 und die Befestigungseinrichtung 240 sind speziell zur Anbringung des in Fig. 2 gezeigten Betätigungshebels 250 mit dem rechteckigen Querschnittsprofil ausgebildet.

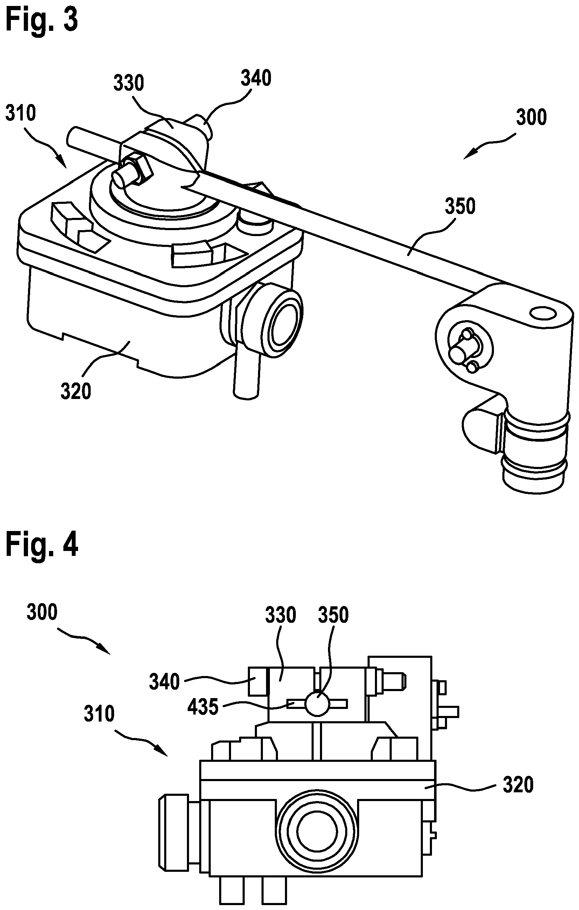

Fig. 3 zeigt eine perspektivische Darstellung einer Ventilvorrichtung 300 gemäß einem Ausführungsbeispiel der vorliegenden Erfindung. Die Ventilvorrichtung 300 weist ein Ventil 310, einen Ventilkörper 320, einen Mitnehmer 330, eine Befestigungseinrichtung 340 und einen Betätigungshebel 350 auf. Das Ventil 310 weist den Ventilkörper 320, den Mitnehmer 330 und die Befestigungseinrichtung 340 auf. Bei dem Ventil kann es sich um ein Luftfederungsventil für ein Kraftfahrzeug handeln. Der Mitnehmer 330 ist Teil des Ventilkörpers 320 oder an dem Ventilkörper 320 angebracht.

Der Betätigungshebel 350 weist ein rundes Querschnittsprofil auf. Somit ist der Betätigungshebel 350 zylindrisch bzw. in Gestalt einer zylindrischen Stange ausgeformt. Der Betätigungshebel 350 ist an dem Mitnehmer 330 des Ventils 310 angebracht. Dabei ist der Betätigungshebel 350 in einem in Fig. 3 nicht explizit gezeigten, aber in Fig. 4 dargestellten Aufnahmeabschnitt des Mitnehmers 330 aufgenommen. Der Betätigungshebel 350 ist mittels der Befestigungseinrichtung 340 in dem Aufnahmeabschnitt des Mitnehmers 330 des Ventils 310 befestigt. Der Betätigungshebel 350 weist ein Betätigungsende und ein Einführungsende auf. Der Betätigungshebel 350 ist in Fig. 3 beispielhaft durch den Aufnahmeabschnitt hindurchgeschoben angeordnet, wobei ein Teilabschnitt des Betätigungshebels 350 an dessen Einführungsende über den Aufnahmeabschnitt bzw. den Mitnehmer 330 übersteht.

Der in Fig. 3 nicht explizit gezeigte, aber in Fig. 4 dargestellte und unter Bezugnahme auf Fig. 4 beschriebene Aufnahmeabschnitt des Mitnehmers 330 erstreckt sich in Gestalt einer Durchgangsöffnung entlang einer Aufnahmeachse durch den Mitnehmer 330 des Ventils 310 hindurch. Die Befestigungseinrichtung 340 weist beispielhaft eine Bohrung durch den Mitnehmer, eine Schraube und eine Mutter auf. Dabei erstreckt sich die Bohrung quer zu der Aufnahmeachse des Aufnahmeabschnitts in dem Mitnehmer 330. Die Schraube der Befestigungseinrichtung 340 ist in der Bohrung angeordnet und erstreckt sich durch dieselbe hindurch. Die Mutter ist auf die Schraube aufgeschraubt. Die Befestigungseinrichtung 340 ist ausgebildet, um den Betätigungshebel 350 in dem Aufnahmeabschnitt des Mitnehmers 330 lösbar zu befestigen.

Fig. 4 zeigt eine perspektivische Darstellung der Ventilvorrichtung 300 aus Fig. 3 aus einem anderen Blickwinkel. Gezeigt sind die Ventilvorrichtung 300, das Ventil 310, der Ventilkörper 320, der Mitnehmer 330, die Befestigungseinrichtung 340, der Betätigungshebel 350 und ein Aufnahmeabschnitt 435. Die Ansicht in Fig. 4 zeigt die Ventilvorrichtung 300 aus Fig. 3 in einer Draufsicht auf das über den Aufnahmeabschnitt 435 bzw. den Mitnehmer 330 überstehende Einführungsende des Betätigungshebels 350. Erkennbar ist somit in Fig. 4 auch das runde Querschnittsprofil des Betätigungshebels 350.

Der Aufnahmeabschnitt 435 ist einem Schlüsselloch für einen Doppelbartschlüssel ähnlich ausgeformt. So weist der Aufnahmeabschnitt 435 einen Rundprofilabschnitt zum Aufnehmen des Betätigungshebels 350 mit dem runden Querschnittsprofil und einen Rechteckprofilabschnitt zum Aufnehmen eines Betätigungshebels mit einem rechteckigen Querschnittsprofil auf. Hierbei weisen der Rundprofilabschnitt und der Rechteckprofilabschnitt des Aufnahmeabschnittes 435 einen gemeinsamen Mittelpunkt ihrer Querschnittsflächen auf. Der Betätigungshebel 350 mit dem runden Querschnittsprofil ist in dem Rundprofilabschnitt des Aufnahmeabschnittes 435 aufgenommen. Somit ist der Rechteckprofilabschnitt des Aufnahmeabschnittes 435 zumindest teilweise unausgefüllt.

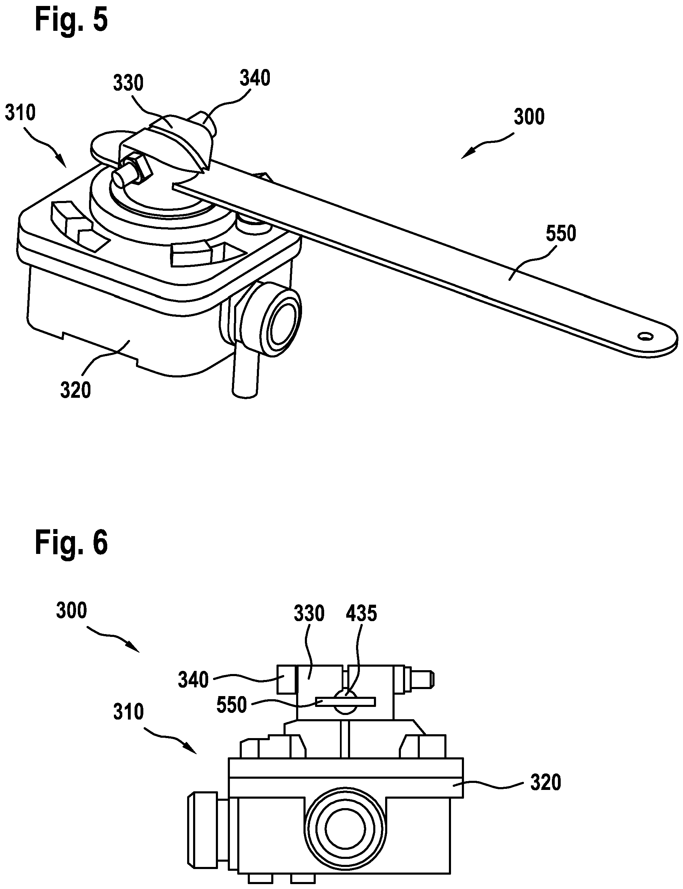

Fig. 5 zeigt eine perspektivische Darstellung der Ventilvorrichtung 300 aus Fig. 3 bzw. Fig. 4, wobei die Ventilvorrichtung 300 anstelle des Betätigungshebels mit dem runden Querschnittsprofil einen Betätigungshebel 550 mit einem rechteckigen Querschnittsprofil aufweist. Das rechteckige Querschnittsprofil des Betätigungshebels 550 weist hierbei eine Länge auf, die zumindest zweimal, beispielhaft mindestens viermal größer ist als eine Breite desselben. Bis auf den Betätigungshebel 550 entspricht die in Fig. 5 gezeigte Ventilvorrichtung 300 der Ventilvorrichtung aus Fig. 3 bzw. Fig. 4.

Fig. 6 zeigt eine perspektivische Darstellung der Ventilvorrichtung 300 aus Fig. 5 aus einem anderen Blickwinkel. Gezeigt sind die Ventilvorrichtung 300, das Ventil 310, der Ventilkörper 320, der Mitnehmer 330, die Befestigungseinrichtung 340, der Aufnahmeabschnitt 435 und der Betätigungshebel 550. Die Ansicht in Fig. 4 zeigt die Ventilvorrichtung 300 aus Fig. 5 in einer Draufsicht auf das über den Aufnahmeabschnitt 435 bzw. den Mitnehmer 330 überstehende Einführungsende des Betätigungshebels 550. Erkennbar ist somit in Fig. 6 auch das rechteckige Querschnittsprofil des Betätigungshebels 550. Bei dem Ventil 310, und somit auch dem Aufnahmeabschnitt 435, handelt es sich um das in Fig. 3 bzw. Fig. 4 gezeigte und beschriebene Ventil. Der Betätigungshebel 550 mit dem rechteckigen Querschnittsprofil ist in dem Rechteckprofilabschnitt des Aufnahmeabschnittes 435 aufgenommen. Somit ist der Rundprofilabschnitt des Aufnahmeabschnittes 435 teilweise unausgefüllt.

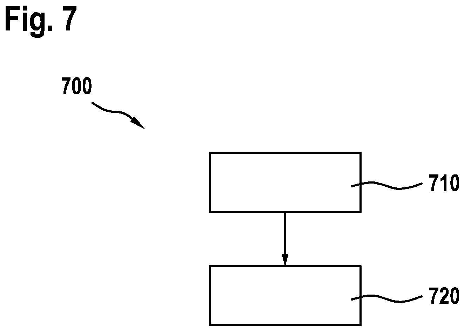

Fig. 7 zeigt ein Ablaufdiagramm eines Verfahrens 700 gemäß einem Ausführungsbeispiel der vorliegenden Erfindung. Das Verfahren 700 dient zum Zusammenfügen einer Ventilvorrichtung. Bei der Ventilvorrichtung, die mittels des Verfahrens 700 zusammenfügbar ist, handelt es sich beispielsweise um die Ventilvorrichtung aus den Figuren 3 bis 6. Das Verfahren 700 umfasst einen Schritt 710 des Bereitstellens eines Ventilkörpers mit einem Mitnehmer und eines an dem Mitnehmer anbringbaren Betätigungshebels, der ein erstes Querschnittsprofil oder ein zweites Querschnittsprofil aufweist. Auch weist das Verfahren 700 einen Schritt 720 des Anordnens des Betätigungshebels in einem an dem Mitnehmer angeordneten Aufnahmeabschnitt auf, der ausgebildet ist, um ohne Umrüsten des Aufnahmeabschnitts einen Betätigungshebel mit einem ersten Querschnittsprofil aufzunehmen oder einen Betätigungshebel mit einem von dem ersten Querschnittsprofil unterschiedlichen, zweiten Querschnittsprofil aufzunehmen.

Insbesondere kann im Schritt 720 des Anordnens der Betätigungshebel in den Aufnahmeabschnitt des Mitnehmers hineingeschoben werden, wobei ein Einführungsende des Betätigungshebels ganz oder teilweise durch den Aufnahmeabschnitt hindurchgeschoben oder hindurchgeschoben und darüber hinausgeschoben wird. Auf diese Weise ist eine Längeneinstellung bzw. Längenanpassung des Betätigungshebels ermöglicht. Ferner kann das Verfahren 700 einen nicht gezeigten Schritt des Befestigens des Betätigungshebels in dem Aufnahmeabschnitt des Mitnehmers mittels einer an dem Mitnehmer anordenbaren oder angeordneten Befestigungseinrichtung aufweisen.

Die beschriebenen Ausführungsbeispiele sind nur beispielhaft gewählt und können miteinander kombiniert werden.

### Bezugszeichenliste

- 100: Ventilvorrichtung
- 110: Ventil
- 120: Ventilkörper
- 130: Mitnehmer
- 140: Befestigungseinrichtung
- 150: Betätigungshebel
- 200: Ventilvorrichtung
- 210: Ventil
- 220: Ventilkörper
- 230: Mitnehmer
- 240: Befestigungseinrichtung
- 250: Betätigungshebel
- 300: Ventilvorrichtung
- 310: Ventil
- 320: Ventilkörper
- 330: Mitnehmer
- 340: Befestigungseinrichtung
- 350: Betätigungshebel mit rundem Querschnittsprofil
- 435: Aufnahmeabschnitt
- 550: Betätigungshebel mit rechteckigem Querschnittsprofil
- 700: Verfahren zum Zusammenfügen einer Ventilvorrichtung
- 710: Schritt des Bereitstellens
- 720: Schritt des Anordnens

## Patentansprüche

1. Ventil (310), insbesondere Luftfederungsventil für ein Fahrzeug, wobei das Ventil (310) einen Ventilkörper (320) mit einem Mitnehmer (330) aufweist, wobei der Mitnehmer (330) einen Aufnahmeabschnitt (435) zum Aufnehmen eines an dem Mitnehmer anbringbaren Betätigungshebels (350, 550) aufweist, wobei der Aufnahmeabschnitt (435) ausgebildet ist, um ohne Umrüsten des Aufnahmeabschnitts (435) einen Betätigungshebel (350) mit einem ersten Querschnittsprofil aufzunehmen oder einen Betätigungshebel (550) mit einem von dem ersten Querschnittsprofil unterschiedlichen, zweiten Querschnittsprofil aufzunehmen,
**dadurch gekennzeichnet, dass**
der Aufnahmeabschnitt (435) einen Rundprofilabschnitt zum Aufnehmen eines Betätigungshebels (350) mit einem runden Querschnittsprofil und einen Rechteckprofilabschnitt zum Aufnehmen eines Betätigungshebels (550) mit einem rechteckigen Querschnittsprofil aufweist.

2. Ventil (310) gemäß Anspruch 1, **dadurch gekennzeichnet, dass** der Rundprofilabschnitt und der Rechteckprofilabschnitt des Aufnahmeabschnitts (435) sich als eine gemeinsame Durchgangsöffnung entlang einer Aufnahmeachse des Betätigungshebels (350, 550) in dem Aufnahmeabschnitt (435) durch den Mitnehmer (330) hindurch erstrecken.

3. Ventil (310) gemäß einem der vorangegangenen Ansprüche, **dadurch gekennzeichnet, dass** der Aufnahmeabschnitt (435) ausgebildet ist, um Schmalseiten eines rechteckigen Querschnittsprofils eines Betätigungshebels (550) mit einem rechteckigen Querschnittsprofil U-förmig zu umgreifen, wobei der Aufnahmeabschnitt (435) gegen die Schmalseiten des rechteckigen Querschnittsprofils in Kontakt bringbar ist und gegen an die Schmalseiten angrenzende Teilabschnitte von Langseiten des rechteckigen Querschnittsprofils in Kontakt bringbar ist.

4. Ventil (310) gemäß einem der vorangegangenen Ansprüche, **dadurch gekennzeichnet, dass** der Aufnahmeabschnitt (435) ausgebildet ist, um gegen zwei Umfangsteilabschnitte eines runden Querschnittsprofils eines Betätigungshebels (350) mit einem runden Querschnittsprofil in Kontakt bringbar zu sein.

5. Ventil (310) gemäß einem der vorangegangenen Ansprüche, **gekennzeichnet durch** eine an dem Mitnehmer (330) anordenbare oder angeordnete Befestigungseinrichtung (340) zum Befestigen des Betätigungshebels (350, 550) in dem Aufnahmeabschnitt (435) des Mitnehmers (330).

6. Ventil (310) gemäß Anspruch 5, **dadurch gekennzeichnet, dass** die Befestigungseinrichtung (340) eine Längserstreckungsachse aufweist, die sich im Wesentlichen quer bezüglich einer Aufnahmeachse des Betätigungshebels (350, 550) in dem Aufnahmeabschnitt (435) erstreckt.

7. Ventilvorrichtung (300), die folgende Merkmale aufweist:
ein Ventil (310) gemäß einem der vorangegangenen Ansprüche; und
einen Betätigungshebel (350, 550) mit einem ersten Querschnittsprofil oder einem zweiten Querschnittsprofil, wobei der Betätigungshebel (350, 550) zum Anbringen desselben an dem Mitnehmer (330) des Ventils (310) in dem Aufnahmeabschnitt (435) des Mitnehmers (330) aufnehmbar oder aufgenommen ist.

8. Verfahren (700) zum Zusammenfügen einer Ventilvorrichtung (300), wobei das Verfahren (700) folgende Schritte aufweist:
Bereitstellen (710) eines Ventilkörpers (320) mit einem Mitnehmer (330) und eines an dem Mitnehmer anbringbaren Betätigungshebels (350, 550), der ein erstes Querschnittsprofil oder ein zweites Querschnittsprofil aufweist; und
Anordnen (720) des Betätigungshebels (350, 550) in einem an dem Mitnehmer (330) angeordneten Aufnahmeabschnitt (435), der ausgebildet ist, um ohne Umrüsten des Aufnahmeabschnitts (435) einen Betätigungshebel (350) mit einem ersten Querschnittsprofil aufzunehmen oder einen Betätigungshebel (550) mit einem von dem ersten Querschnittsprofil unterschiedlichen, zweiten Querschnittsprofil aufzunehmen, wobei der Aufnahmeabschnitt (435) einen Rundprofilabschnitt zum Aufnehmen eines Betätigungshebels (350) mit einem runden Querschnittsprofil und einen Rechteckprofilabschnitt zum Aufnehmen eines Betätigungshebels (550) mit einem rechteckigen Querschnittsprofil aufweist.

9. Verfahren (700) gemäß Anspruch 8, **gekennzeichnet durch** einen Schritt des Befestigens des Betätigungshebels (350, 550) in dem Aufnahmeabschnitt (435) des Mitnehmers (330) mittels einer an dem Mitnehmer (330) anordenbaren oder angeordneten Befestigungseinrichtung (340).

## Claims

1. A valve (310), in particular a pneumatic suspension valve for a vehicle, wherein the valve (310) comprises a valve body (320) having a driver (330), wherein the driver (330) comprises a receiving section (435) for receiving an actuating lever (350, 500) that can be mounted on the driver, wherein the receiving section (435) is configured to receive, without retrofitting the receiving section (435), an actuating lever (350) having a first cross-sectional profile or an actuating lever (350) having a second cross-sectional profile that is different from the first cross-sectional profile,
**characterized in that**
the receiving section (435) comprises a circular profile section for receiving an actuating lever (350) having a circular cross-sectional profile, and a rectangular profile section for receiving an actuating lever (550) having a rectangular cross-sectional profile.

2. The valve (310) according to claim 1, **characterized in that** the circular profile section and the rectangular profile section of the receiving section (435) extend through the driver (330) along a receiving axis of the actuating lever (350, 550) in the receiving section (435) as a common passage opening.

3. The valve (310) according to any one of the preceding claims, **characterized in that** the receiving section (435) is configured to encompass narrow sides of a rectangular cross-sectional profile of an actuating lever (550) having a rectangular cross-sectional profile in the manner of a U-shape, wherein the receiving section (435) can be brought in contact against the narrow sides of the rectangular cross-sectional profile and can be brought in contact against partial sections of longitudinal sides of the rectangular cross-sectional profile that are adjacent to the narrow sides.

4. The valve (310) according to any one of the preceding claims, **characterized in that** the receiving section (435) is configured to be able to be brought into contact against two peripheral partial sections of a circular cross-sectional profile of an actuating lever (350) having a circular cross-sectional profile.

5. The valve (310) according to any one of the preceding claims, **characterized by** a fastening device (340) that is arrangeable or arranged on the driver (330), for fastening the actuating lever (350, 550) in the driver's (330) receiving section (435).

6. The valve (310) according to claim 5, **characterized in that** the fastening device (340) comprises an axis of longitudinal extension extending within the receiving section (435) substantially transversely with respect to a receiving axis of the actuating lever (350, 550).

7. A valve device (300) comprising the following features:
a valve (310) according to any one of the preceding claims; and
an actuating lever (350, 550) having a first cross-sectional profile or a second cross-sectional profile, wherein the actuating lever (350, 550) for the mounting thereof on the driver (330) of the valve (310) is receivable or received in the driver's (330) receiving section (435).

8. A method (700) for assembling a valve device (300), wherein the method (700) comprises the following steps of:
providing (710) a valve body (320) having a driver (330), and an actuating lever (350, 550) comprising a first cross-sectional profile or a second cross-sectional profile that is mountable on the driver; and
disposing (720) the actuating lever (350, 550) in a receiving section (435) arranged on the driver (330) which is configured to receive, without retrofitting the receiving section (435), an actuating lever (350) having a first cross-sectional profile or an actuating lever (350) having a second cross-sectional profile that is different from the first cross-sectional profile, wherein the receiving section (435) comprises a circular profile section for receiving an actuating lever (350) having a circular cross-sectional profile, and a rectangular profile section for receiving an actuating lever (550) having a rectangular cross-sectional profile.

9. Method (700) according to claim 8, **characterized by** a step of fastening the actuating lever (350, 550) in the driver's (330) receiving section (435) by means of a fastening device (340) that is arrangeable or arranged on the driver (330).

## Revendications

1. Soupape (310), en particulier soupape de suspension pneumatique pour un véhicule, sachant que la soupape (310) présente un corps de soupape (320) pourvu d'un entraîneur (330), sachant que l'entraîneur (330) présente une section de logement (435) permettant de loger un levier d'actionnement (350, 550) pouvant être monté sur l'entraîneur, sachant que la section de logement (435) est constituée pour loger, sans adaptation de la section de logement (435), un levier d'actionnement (350) présentant un premier profil en coupe transversale ou un levier d'actionnement (550) présentant un deuxième profil en coupe transversale différent du premier profil en coupe transversale,
**caractérisée en ce que**
la section de logement (435) présente une section à profil rond permettant de loger un levier d'actionnement (350) présentant un profil en coupe transversale rond et une section à profil rectangulaire permettant de loger un levier d'actionnement (550) présentant un profil en coupe transversale rectangulaire.

2. Soupape (310) selon la revendication 1, **caractérisée en ce que** la section à profil rond et la section à profil rectangulaire de la section de logement (435) s'étendent à travers l'entraîneur (330) en tant qu'ouverture traversante commune le long d'un axe de logement du levier d'actionnement (350, 550) dans la section de logement (435).

3. Soupape (310) selon l'une des revendications précédentes, **caractérisée en ce que** la section de logement (435) est constituée pour entourer en forme de U des côtés étroits d'un profil en coupe transversale rectangulaire d'un levier d'actionnement (550) présentant un profil en coupe transversale rectangulaire, sachant que la section de logement (435) peut être placée en contact contre les côtés étroits du profil en coupe transversale rectangulaire et peut être placée en contact contre des sections partielles de côtés longitudinaux du profil en coupe transversale rectangulaire qui sont contigus aux côtés étroits.

4. Soupape (310) selon l'une des revendications précédentes, **caractérisée en ce que** la section de logement (435) est constituée pour pouvoir être placée en contact contre deux sections partielles de périphérie d'un profil en coupe transversale rond d'un levier d'actionnement (350) présentant un profil en coupe transversale rond.

5. Soupape (310) selon l'une des revendications précédentes, **caractérisée par** un dispositif de fixation (340) pouvant être disposé ou étant disposé au niveau de l'entraîneur (330) et permettant de fixer le levier d'actionnement (350, 550) dans la section de logement (435) de l'entraîneur (330).

6. Soupape (310) selon la revendication 5, **caractérisée en ce que** le dispositif de fixation (340) présente un axe d'extension longitudinale qui s'étend de manière sensiblement transversale par rapport à un axe de logement du levier d'actionnement (350, 550) dans la section de logement (435).

7. Dispositif formant soupape (300) qui présente les caractéristiques suivantes :
une soupape (310) selon l'une des revendications précédentes ; et
un levier d'actionnement (350, 550) présentant un premier profil en coupe transversale ou un deuxième profil en coupe transversale, sachant que le levier d'actionnement (350, 550), afin de monter celui-ci sur l'entraîneur (330) de la soupape (310), peut être logé ou est logé dans la section de logement (435) de l'entraîneur (330).

8. Procédé (700) permettant d'assembler un dispositif formant soupape (300), sachant que le procédé (700) présente les étapes suivantes :
mise à disposition (710) d'un corps de soupape (320) pourvu d'un entraîneur (330) et d'un levier d'actionnement (350, 550) pouvant être monté sur l'entraîneur et présentant un premier profil en coupe transversale ou un deuxième profil en coupe transversale ; et
agencement (720) du levier d'actionnement (350, 550) dans une section de logement (435) disposée au niveau de l'entraîneur (330) et constituée pour loger, sans adaptation de la section de logement (435), un levier d'actionnement (350) présentant un premier profil en coupe transversale ou un levier d'actionnement (550) présentant un deuxième profil en coupe transversale différent du premier profil en coupe transversale, sachant que la section de logement (435) présente une section à profil rond permettant de loger un levier d'actionnement (350) présentant un profil en coupe transversale rond et une section à profil rectangulaire permettant de loger un levier d'actionnement (550) présentant un profil en coupe transversale rectangulaire.

9. Procédé (700) selon la revendication 8, **caractérisé par** une étape de fixation du levier d'actionnement (350, 550) dans la section de logement (435) de l'entraîneur (330) au moyen d'un dispositif de fixation (340) pouvant être disposé ou étant disposé au niveau de l'entraîneur (330).
